# EUROPÄISCHE PATENTSCHRIFT

(11) **EP 0 497 996 B1**
(45) Veröffentlichungstag und Bekanntmachung des Hinweises auf die Patenterteilung: **13.04.1994**
(21) Anmeldenummer: 91101411.6
(22) Anmeldetag: 02.02.1991
(51) Int. Cl.: B29C 59/10, H01T 19/04

(54) **Vorrichtung zur indirekten Koronabehandlung von leitenden und nichtleitenden Materialien unterschiedlichster Gestalt und Dicke**
Apparatus for indirectly treating, with the corona effect, conductor and non conductor materials having different shape and thickness
Appareil pour le traitement indirect, utilisant l'effet corona, de matériaux conducteurs et non conducteurs de differentes formes et épaisseurs

(43) Veröffentlichungstag der Anmeldung: 12.08.1992
(73) Patentinhaber: SOFTAL electronic GmbH, D-22047 Hamburg (DE)
(72) Erfinder: Prinz, Eckhard, W-2071 Hamfelde (DE); Martens, Bernd, W-2110 Buchholz 5 (DE); Gerstenberg. K.W., W-2083 Halstenbek (DE); Förnsel, Peter, W-4905 Spenge (DE)
(74) Vertreter: von Raffay, Vincenz, Dipl.-Ing.

(56) Entgegenhaltungen:
- CH-A- 449 943
- DE-A- 2 609 783
- DE-A- 2 646 798
- FR-A- 1 364 968
- FR-A- 2 449 988

## Beschreibung

Die Erfindung betrifft eine Vorrichtung nach dem Oberbegriff des Anspruches 1.

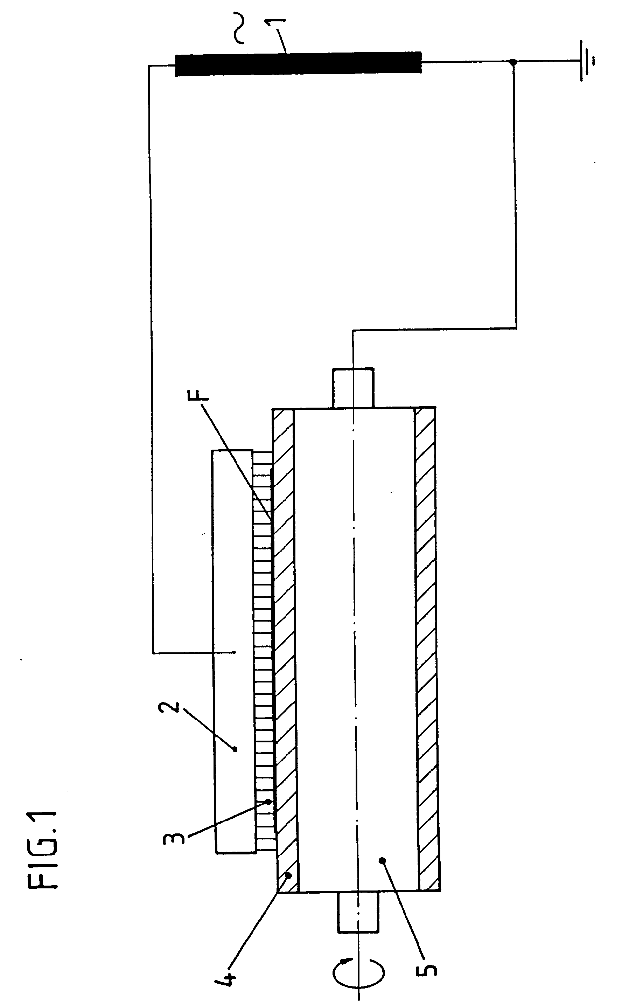

Bekannt sind Einrichtungen zur Behandlung der Oberfläche von Bahnen aus Kunststoff oder anderen Materialien durch gleichmäßig verteilte elektrische Entladungen auf der zu behandelnden Oberfläche mit zwei Arbeitselektroden, von der eine mit einem dielektrischen Material ummantelt ist (Fig. 1). Zwischen beiden Elektroden wird eine hohe Wechselspannung mit einer Frequenz typischerweise zwischen 1o kHz und 100 kHz gelegt, so daß eine gleichmäßige Funkenentladung stattfindet. Das zu behandelnde Material wird zwischen den Elektroden durchgeführt und der Entladung ausgesetzt.

Es wurde experimentell beobachtet, daß die Wirkungen dieser elektrischen Entladungen auf fast allen Kunststoffoberflächen in einer Änderung der Oberflächeneigenschaften hauptsächlich aufgrund von Oberflächenoxidation bestehen. Durch eine solche Veränderung wird die "Benetzbarkeit" der Oberflächen verbessert, das heißt, die molekulare Kohäsionskraft von Flüssigkeiten wird in Bezug auf die Adhäsionskraft in der Kontaktfläche verändert. Praktisch führt dies dazu, daß z.B.das Lackieren und Kleben auf diesen Oberflächen erleichtert wird, und daß haftfeste Verbindungen zustandekommen.

Die Elektrodensysteme haben Abstände im Millimeterbereich typischerweise zwischen 1 und 3 mm. Daher beschränkt sich die Behandlung mit derartigen Vorrichtungen auf ebene oder einseitig gekrümmte dünne Substrate wie Kunststoffolien und Papiere. Außerdem zeigt sich in der Praxis, daß das Dielektrikum aufgrund der dauernden Beanspruchungen durch elektrische Entladungen durchbrennt und damit unbrauchbar wird. Ein weiterer Nachteil sind parasitäre Koronaentladungen auf der Rückseite der Bahnen, da diese insbesondere bei höheren Geschwindigkeiten nicht voll auf der als Walze ausgeführten Elektrode aufliegen. Nachteilig wirken sich auch elektrostatische Ladungen auf der Bahn aus, die infolge triboelektrischer Effekte entstehen. Diese Ladungen erschweren das Aufwickeln der Bahn und können gegebenenfalls nachfolgende Bearbeitungsschritte, wie z.B. Lackieren oder Verkleben, nachteilig beeinflussen. Die Beschränkung auf dünne Materialien ist für die Praxis ebenfalls ein großer Nachteil. Bei dickeren Materialien ist die Behandlung nämlich nicht mehr möglich, da der elektrische Gesamtwiderstand zwischen den Elektroden so groß wird, daß eine einwandfreie Koronaentladung nicht mehr zündet. Auch kann es vorkommen, daß dickes Material der dann notwendigen hohen Entladungsspannung nicht mehr widerstehen kann, so daß es zu einzelnen elektrischen Durchschlägen kommt, durch die das zu behandelnde Material beschädigt wird. Dies ist insbesondere bei porösen, inhomogenen Materialien, wie z.B. Schaumstoff, der Fall.

Eine Vorrichtung, die so aufgebaut ist, wie in dem Oberbegriff des Anspruches 1 definiert, ist aus der DE-OS 26 09 783 bekannt. Mit dieser Vorrichtung wird grundsätzlich eine Rückseitenbehandlung der zu behandelnden Folie vermieden. Gleichzeitig wird die elektrostatische Aufladung der Folie durch die Koronabehandlung reduziert. In der Praxis haben sich derartige Vorrichtungen aber häufig nicht bewährt. Entweder ist die Anordnung nicht ausreichend, um für eine intensive Vorbehandlung mit gutem Wirkungsgrad zu sorgen, oder aber die Anordnung erwärmt sich unverhältnismäßig stark, wodurch eine geringe Lebensdauer bedingt ist, oder zum Betrieb der Vorrichtung wird eine große Gasmenge benötigt, bei gleichzeitigem geringen Abstand zum Substrat.

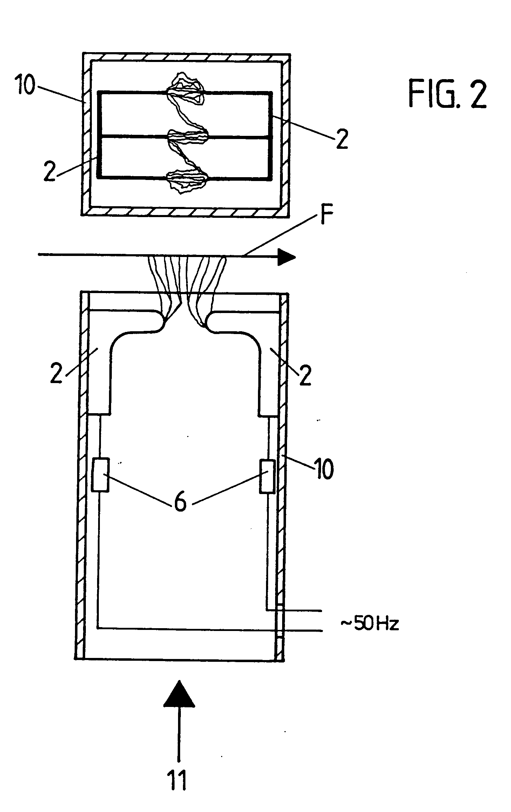

Eine weitere bekannte Bauausführung besteht aus einem kurzen, rechteckigen Kunststoffrohr, an dessen einem Ende an zwei gegenüberliegenden Seiten eine größere Anzahl einzelner Messerelektroden zwei Elektrodenpakete bilden, die in einem geringen Abstand gegenüber angeordnet sind (siehe Fig. 2). Zur Begrenzung der elektrischen Leistung ist jedes Messerpaket über einen Vorwiderstand, der in dem Rohr untergebracht ist, mit einer 50 Hz Hochspannungsquelle verbunden. Die zwischen den paarweisen Messern stehenden Einzelfunken werden mit einem kräftigen, ungerichteten Luftstrom nach außen ausgelenkt. Mit einer derartigen Vorrichtung lassen sich die Oberflächen fast beliebig geformter Materialien und auch die von dickeren Materialien einseitig behandeln. Der Vorteil liegt darin, daß die durch den Gasstrom ausgelenkten elektrischen Funken die Behandlung auch im Abstand von mehreren Millimetern ermöglichen.

Mit dieser Vorrichtung wird aber kein stabiler, gleichmäßiger-Koronaeffekt erreicht. Innerhalb der beiden Elektroden-Messerpakete liegen die parallelen Messer auf einem gemeinsamen elektrischen Potential. Zwischen den Paketen bilden sich daher mehrere Zündfunken aus, die allerdings zwischen direkt oder schräg gegenüberliegenden Messern hin- und herspringen und unterschiedliche Energien haben und deren Reichweite sich regellos ändert. Das Hin-und Herspringen der Funken wird durch die niedrige Frequenz von 50 Hz noch begünstigt, da die sich bildenden Funkenkanäle durch den Luftstrom immer wieder aufreißen, d.h. unterbrochen werden. Die ungerichtete, stark verwirbelte Gasströmung fördert diese Schleuder- und Pendelbewegungen der Entladungsfunken noch.

Aufgrund des springenden Funkens wird ein stabiler, homogener, geschlossener Oberflächeneffekt nicht erreicht. Er ist ungleichmäßig in der Intensität und fleckenförmig mit gezackten Rändern. Eine brauchbare Behandlungsspur wird nur erreicht, wenn sich das Werkstück sehr langsam an der Elektrode vorbeibewegt. Dabei bleiben die Ränder ungleichmäßig gezackt, und die Behandlungsintensität ist deutlich schwächer als bei der konventionellen Koronatechnik.
Die Verwendung einer geringen Frequenz der erregenden Wechselspannung erscheint auch prinzipiell nachteilig. Da beim Nulldurchgang der Spannung keine elektrischen Entladungen zwischen den Elektroden auftreten und somit keine Behandlung eines Substrates stattfinden kann, wird der Oberflächeneffekt auf der Substratoberfläche in Bewegungsrichtung der Behandlungselektrode moduliert. Diese Modulation ist umgekehrt proportional zu der Erregerfrequenz und proportional zu der Geschwindigkeit des Substrates. Für ein Elektrodenpaar ergibt sich für eine Erregerfrequenz von 50 Hz und eine Substratgeschwindigkeit von 30 m/min rechnerisch eine charakteristische Modulationslänge von 10 mm, d.h. eine derartige Anordnung ist bei dieser Geschwindigkeit nicht einsetzbar.

Der Erfindung liegt die Aufgabe zugrunde, eine Vorrichtung der eingangs genannten Art zu schaffen, durch die eine gleichmäßige, intensive Koronabehandlung von Materialien beliebiger Art, Form und Dicke möglich ist, ohne ein durch das Material greifendes elektrisches Feld zu erzeugen. Weiterhin befaßt sich die Erfindung mit dem Problem, Koronaeffekte auf der Rückseite des zu behandelnden Materials völlig zu vermeiden, die elektrostatische Aufladung des Materials weitgehend zu verhindern, keine irgendwie ausgeführte Gegenelektrode benutzen zu müssen und insbesondere kein dielektrisches Material im Entladungsspalt anordnen zu müssen.

Diese Aufgabe wird grundsätzlich durch das Kennzeichen des Anspruches 1 gelöst.

Die metallischen Stiftelektroden führen entweder beide Spannung oder eine liegt an Spannung und die andere liegt an Masse, d.h. sie ist geerdet. Bei der zweiten, einfacheren Ausführung, entfällt für die geerdete Elektrode das den Strom begrenzende Bauelement, wie z.B. ein Widerstand, ein Varistor oder ein Kondensator. Vorzugsweise werden hierfür Kondensatoren eingesetzt. Die Kondensatoren übernehmen die Aufgabe des Dielektrikums. Durch Auswahl der Kondensatoren mit entsprechender Kapazität kann die gewünschte Spannung eingestellt und der Generator elektrisch an die Behandlungselektrode angepaßt werden. Der Behandlungseffekt ist grundsätzlich sehr intensiv.

Die erfindungsgemäße Vorrichtung weist nun eine Doppelstiftelektrode, d.h. ein Stiftelektrodenpaar auf, wobei für jede Stiftelektrode ein eigener Kanal zur Druckbeaufschlagung vorhanden ist. Es hat sich in überraschender Weise herausgestellt, daß, wenn ein solcher eigener Kanal für jede der Stiftelektroden vorgesehen ist, ein besonders stabiler und intensiver, bogenförmiger Entladungskanal entsteht, der hinsichtlich der gewünschten Oberflächenbehandlung ein besseres Ergebnis zeigt, als es bei bekannten Vorrichtungen mit einem gemeinsamen Kanal für beide Stiftelektroden der Fall ist. Die Funkenintensität und damit der Behandlungseffekt hängt verständlicherweise auch von der elektrischen Leistung, dem Gasstrom und der verwendeten Gasart ab.

In vorteilhafter Weise kann die Vorrichtung so ausgebildet sein, wie in Anspruch 2 angegeben. Es lassen sich mehrere Einheiten oder Elemente mit jeweils einem Elektrodenpaar und einem Kanal zur Gasbeaufschlagung so kombinieren, wie es für das Behandlungsergebnis erforderlich ist. Hierbei kann aber immer ein- und dieselbe Grundeinheit, bestehend aus Elektrodenhalter, Stiftelektrodenpaar und Gasbeaufschlagungskanal eingesetzt werden.

Bei einer derartigen Vorrichtung mit mehreren, nebeneinander angeordneten Stiftelektrodenpaaren, ist es möglich, einzelne Elektrodenpaare durch Anordnung entsprechender Schalter abzuschalten und damit Einfluß auf das Behandlungsbild zu gewinnen. Diese Abschaltung ist an der Elektrode, aber auch von einer entfernt liegenden Bedienungseinrichtung möglich.

Es sind die unterschiedlichsten Gase einsetzbar. Durch Auswahl entsprechender Gase ist es nicht nur möglich, die Oberflächenbehandlung zu beeinflussen, sondern auch einen Materialauftrag vorzunehmen. Hierzu werden geeignete Gase oder Aerosole eingesetzt, die aufgrund der im Funkenbereich stattfindenden chemischen und physikalischen Prozesse reaktionsfähig werden und sich auf dem Werkstück abscheiden. Derartige Gase sind z.B. alle Kohlenwasserstoffe und verwandte Verbindungen, die z.B. zusätzlich Fluor-, Silicium- oder Metallatome, enthalten, oder auch Silan.

Bilden das zur chemischen Reaktion verwendete Gas und das zum Erhalt der Koronaentladung benötigte Gas miteinander ein reaktives Gemisch, ist eine getrennte Zuführung beider Gase zum Koronabogen notwendig.

Die folgende tabellarische Gegenüberstellung zwischen der erfindungsgemäßen Vorrichtung und dem Stand der Technik macht auf vorteilhafte Ausgestaltungen aufmerksam:

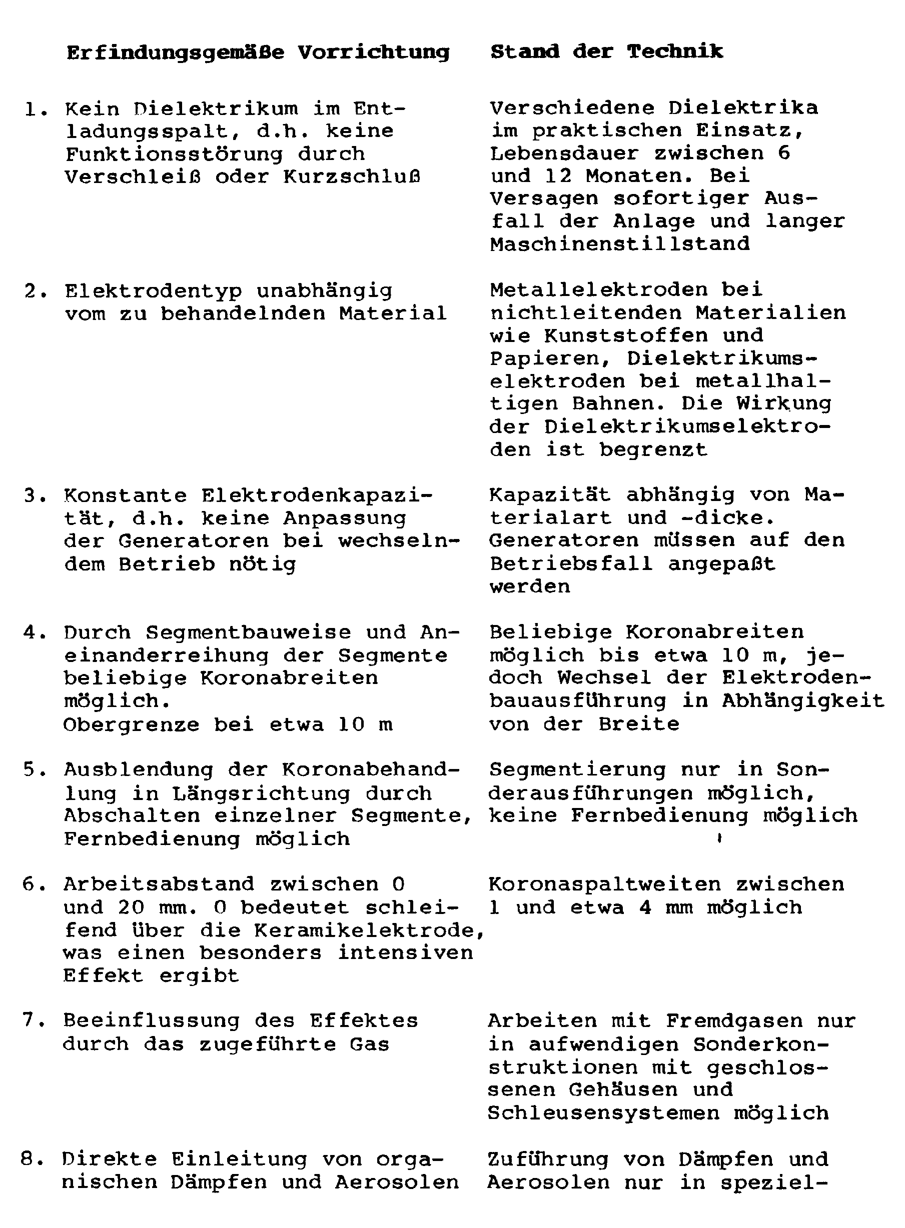

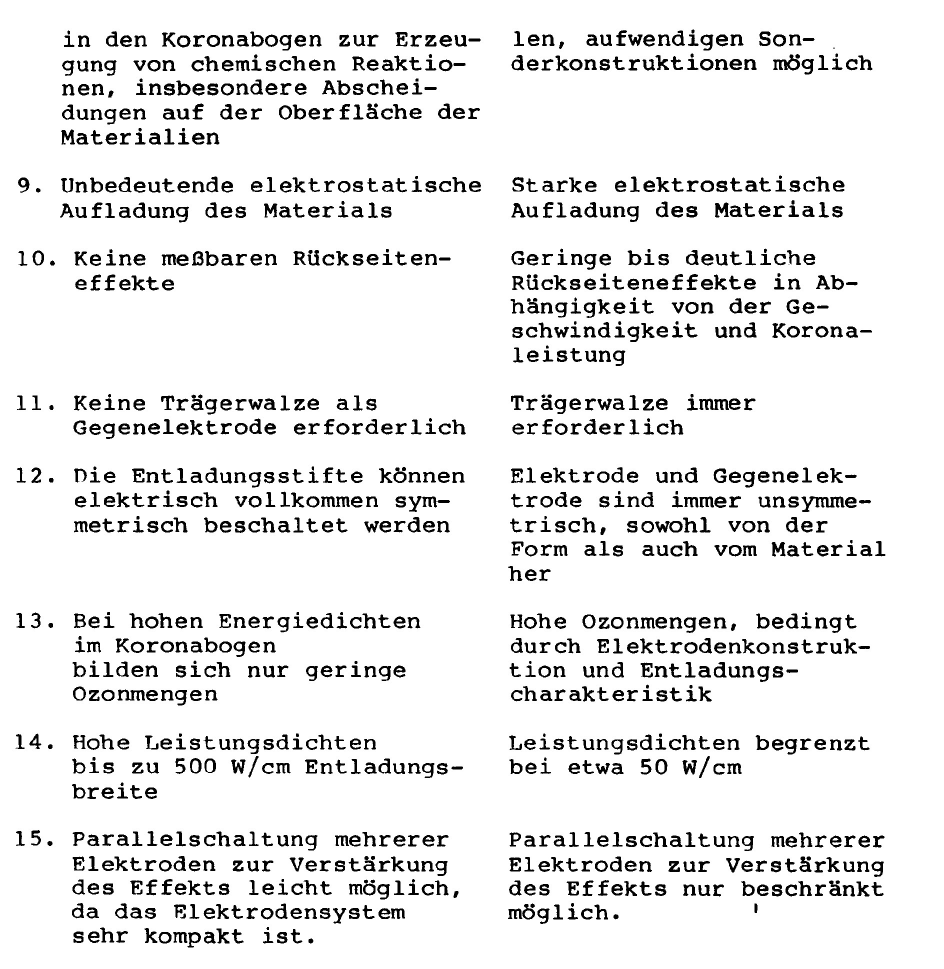

Im folgenden wird die Erfindung unter Hinweis auf die Zeichnungen näher erläutert.
Es zeigt:
- Fig. 1: eine schematische Darstellung einer bekannten Vorrichtung mit Dielektrikum auf der einen Elektrode;
- Fig. 2: eine schematische Ansicht einer anderen zum Stand der Technik gehörenden Vorrichtung mit Druckgasbeaufschlagung;
- Fig. 3A: einen schematischen Querschnitt zur grundsätzlichen Veranschaulichung einer Ausführungsform der Erfindung, bei der jede Stiftelektrode in einem getrennten Kanal mit Druckgasbeaufschlagung liegt.
- Fig. 3B: einen Querschnitt durch die Darstellung der Fig. 3A;
- Fig. 4: eine grafische Darstellung zur Veranschaulichung der erzielbaren Oberflächenspannung quer zur Behandlungsspur;
- Fig. 5: eine grafische Darstellung zur Veranschaulichung der Abhängigkeit der erzielten Oberflächenspannung vom Spaltabstand bei einer Behandlung gemäß Anordnung und Bewegung der Oberfläche nach Fig. 3A;
- Fig. 6: eine grafische Darstellung zur Veranschaulichung des Zusammenhangs zwischen der auf eine erzielte Oberflächenspannung von 38 dyn/cm bezogene Behandlungsbreite und der Geschwindigkeit der bewegten Oberfläche sowie der Elektrodenleistung;
- Fig. 7: eine grafische Darstellung zur Veranschaulichung der erreichbaren Oberflächenspannung in Abhängigkeit von der Geschwindigkeit der bewegten Folie und der Elektrodenleistung;
- Fig. 8: eine Seitenansicht einer ausgeführten Vorrichtung, eingebaut in einen rohrförmigen Elektrodenhalter:
- Fig. 9: vier schematische Darstellungen entsprechend der Fig. 3 zur Veranschaulichung verschiedener elektrischer Schaltungsmöglichkeiten zur Energieversorgung der Stiftelektroden;
- Fig. 10: eine der Fig. 3 entsprechende Ansicht mit einer Zusatzelektrode auf der Rückseite des zu behandelnden Materiales;
- Fig. 11: eine der Fig. 3 entsprechende Ansicht mit einer Hilfselektrode zur Verbesserung der Zündung;
- Fig. 12A: eine schematische Ansicht zur Veranschaulichung mehrerer eingesetzter Stiftelektrodenpaare;
- Fig. 12B: eine schematische Draufsicht zweier hintereinander angeordneter, gegeneinander versetzter Reihen von Stiftelektrodenpaaren; und
- Fig. 13: eine der Fig. 3 entsprechende Ansicht mit einem zusätzlichen Kanal zur Zuführung eines Reaktivgases direkt in den Koronabogen.

Die in Fig. 1 dargestellte, zum Stand der Technik gehörende, Vorrichtung besteht aus einem Transformator oder Generator 1, einer Arbeitselektrode 2, dem Arbeitsspalt 3 und der die Gegenelektrode bildenden Walze 5 mit Dielektrikum 4. Die zu behandelnde Folienbahn ist mit F bezeichnet. Es ist deutlich erkennbar, daß die Entladung durch das Dielektrikum 4 stattfindet.

Die in Fig. 2 dargestellte Vorrichtung weist, wie gesagt, zwei Messerelektrodenpakete 2 auf, die am Ende eines Kunststoffrohres 10 angeordnet sind. Die Druckgaszufuhr erfolgt bei 11. Die zu behandelnde Folie ist wiederum mit F bezeichnet.

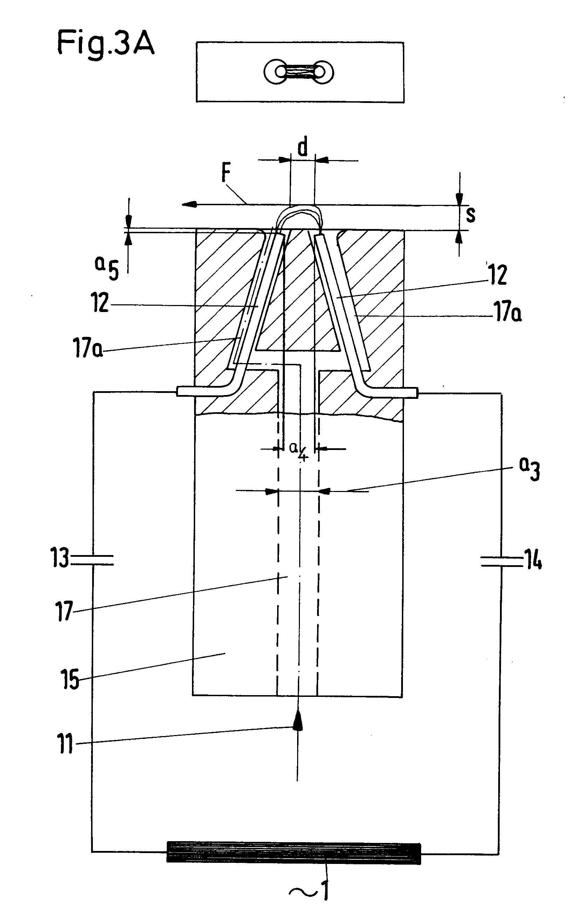

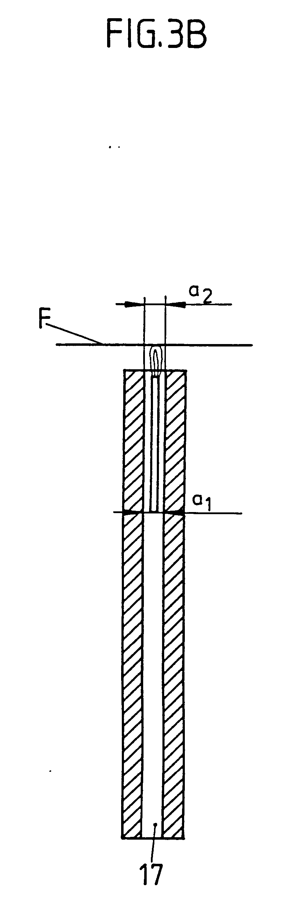

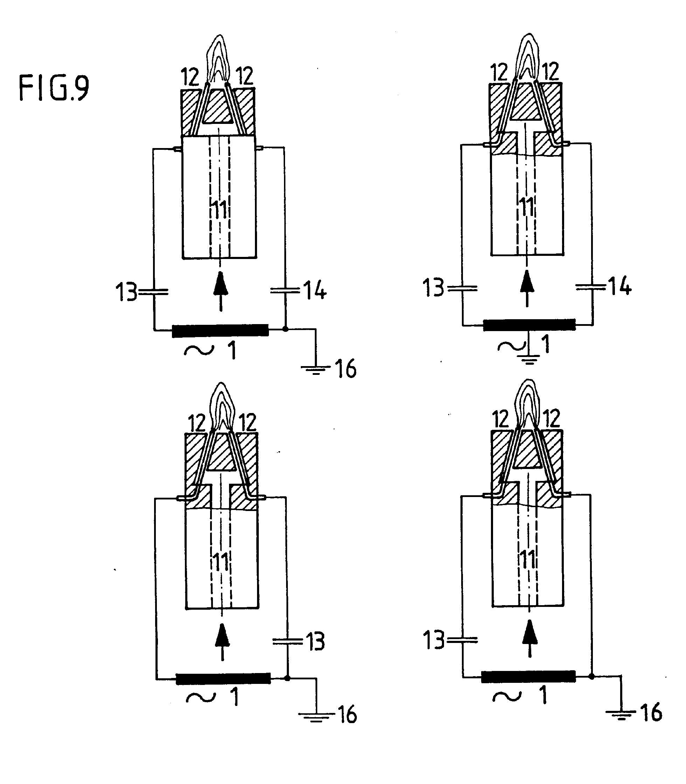

In den Fig. 3A und 3B sind die wesentlichen Bauteile der Vorrichtung nach der Erfindung dargestellt, wobei unterschiedliche elektrische Schaltmöglichkeiten in Fig. 9 dargestellt sind.

Die Vorrichtung besteht aus einem Grundkörper 15 aus Keramikmaterial, in dem die beiden Stiftelektroden 12 aus Metall, vorzugsweise aus Wolfram, angeordnet sind. Es handelt sich hierbei um nackte Stiftelektroden ohne jedes Dielektrikum. Die Stiftelektroden sind so geneigt, daß die Entladungsenden den geringsten Abstand aufweisen, damit hier sicher der Funke gezündet wird und die gewünschte Koronaentladung stattfindet. In dem Elektrodenhalter 15 ist ein Kanal 17 zur Druckgasbeaufschlagung durch einen Gasstrom 11 ausgebildet. Zwischen dem Transformator und jeder Elektrode ist ein strombegrenzendes Element 13 bzw. 14 - gezeichnet ist als Beispiel ein Kondensator - zwischengeschaltet. Die Kondensatoren übernehmen praktisch die Aufgabe des Dielektrikums.

Für jede Stiftelektrode 12 ist ein eigener, gesonderter Kanal 17a für die Gasströmung vorhanden. Versorgt werden die Kanäle 17a von dem in Strömungsrichtung vorgeschalteten Kanal 17.

Grundsätzlich ist es möglich, die zu behandelnde Oberfläche (hier Folie F) so zu bewegen, daß die Entladungsspitzen des Stiftelektrodenpaares 12 in Bezug auf die Bewegungsrichtung hintereinander (Fig. 3A) oder nebeneinander (Fig. 3B) liegen.

Die Sekundärwicklung des Transformators 1 gibt eine Spannung zwischen 2 und 10 kV ab. Der Mündungsbereich des Elektrodenhalters 15, in den der Kanal 17 zur Druckgasbeaufschlagung mündet, ist der Stiftgeometrie angepaßt.

Die in den Fig. 3A und 3B angemessenen Abmessungen sind typisch folgende:
Stiftdurchmesser: 0,5 - 4 mm, vorzugsweise 1,8 mm
a₁ = 1 - 5 mm vorzugsweise 2,0 mm
a₂ = a₁
a₃ = 2 - 10 mm vorzugsweise 3,5 mm
a₄ = 1 - 5 mm vorzugsweise 4,0 mm
a₅ = 0 - 3 mm vorzugsweise 1,0 mm
- Breite der Behandlungsspur:: d = 2 - 20 mm
- Arbeitsabstand:: s = 0 - 20 mm

Der Arbeitsabstand s hängt vom Winkel ab, den die Elektrodenstifte miteinander bilden. Bei einem Winkel von 20° beträgt der nutzbare maximale Arbeitsabstand s etwa 20 mm.

Es ist leicht erkennbar, daß eine kompakte Baueinheit geschaffen wurde, die universell einsetzbar und beliebig kombinierbar ist. Die angegebenen Maße sind typische Maße, um eine Vorstellung der Größenordnung zu geben.

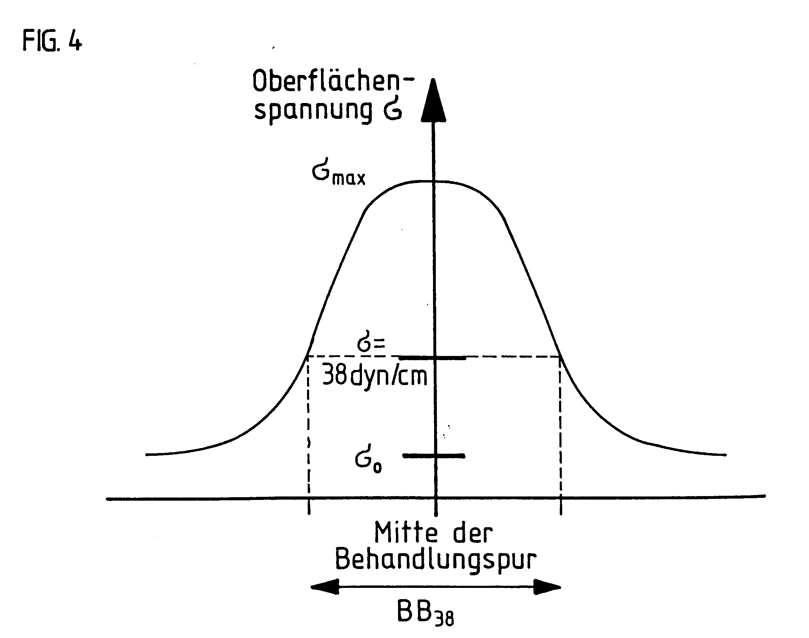

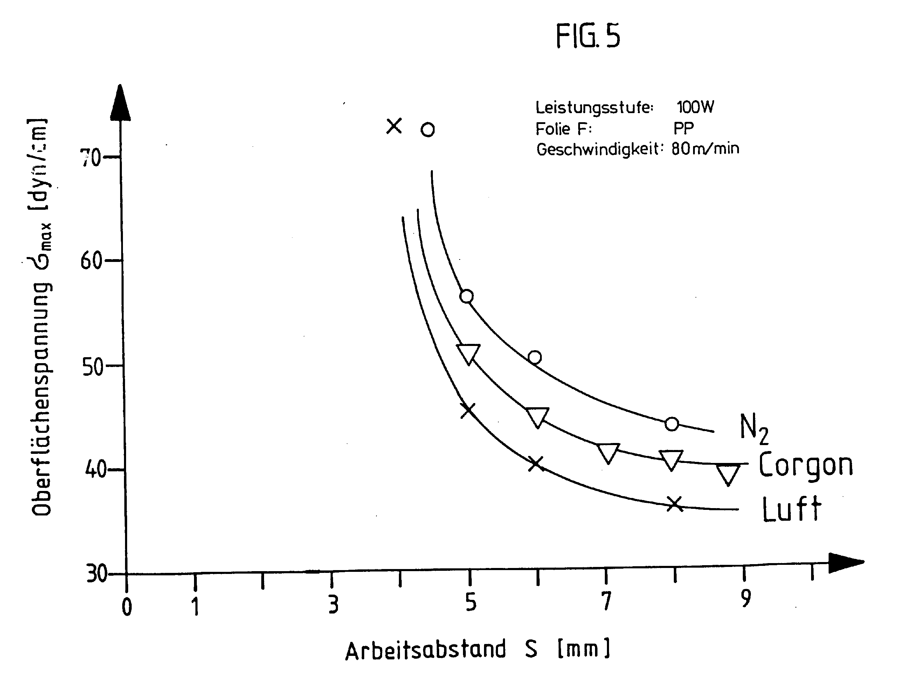

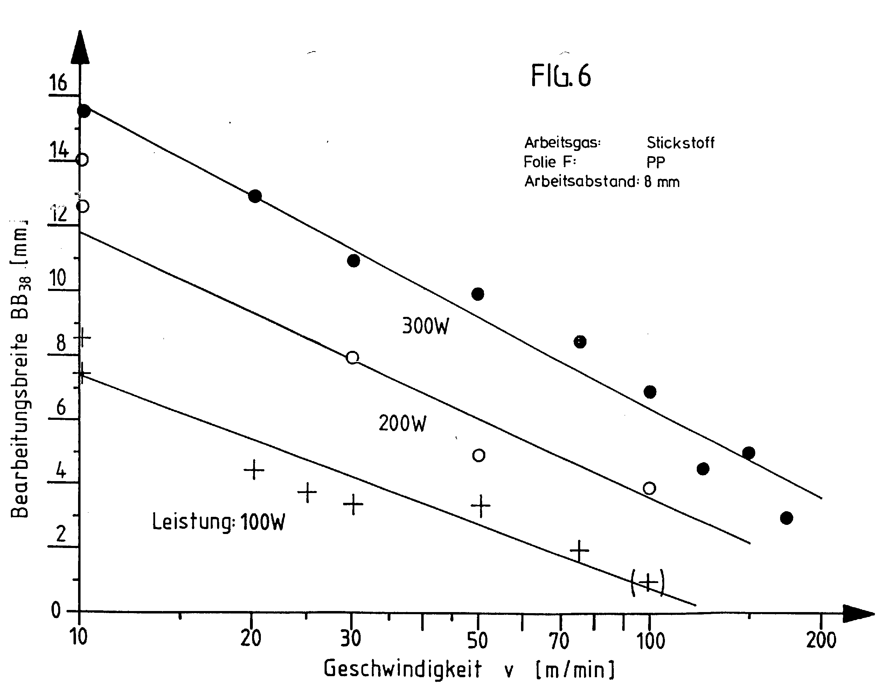

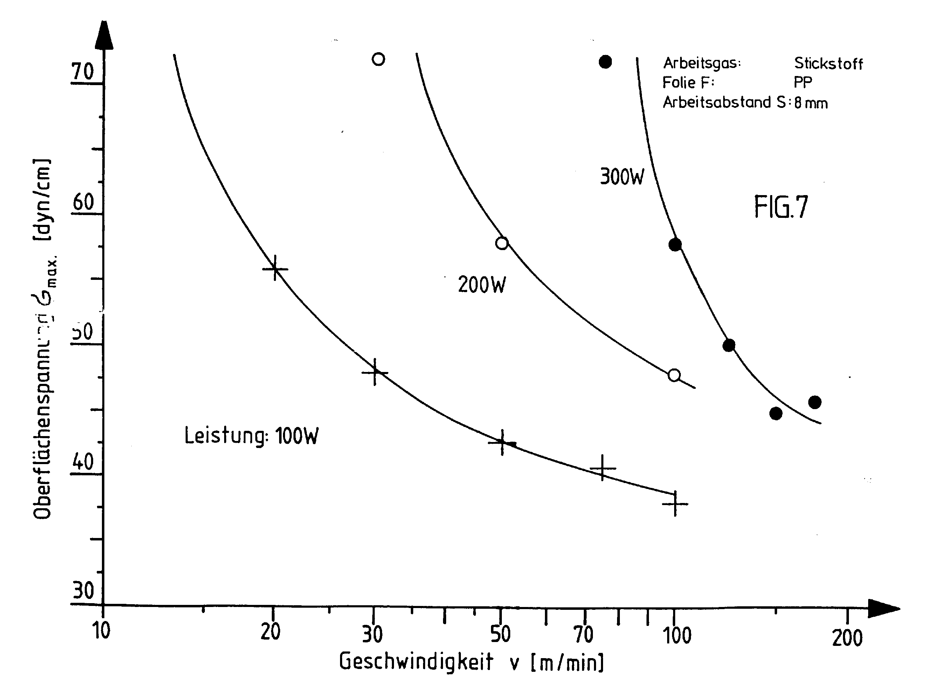

In Fig. 4 bis 7 sind die Ergebnisse verschiedener Versuche, die mit der Vorrichtung nach Fig. 3A durchgeführt wurden, grafisch dargestellt.

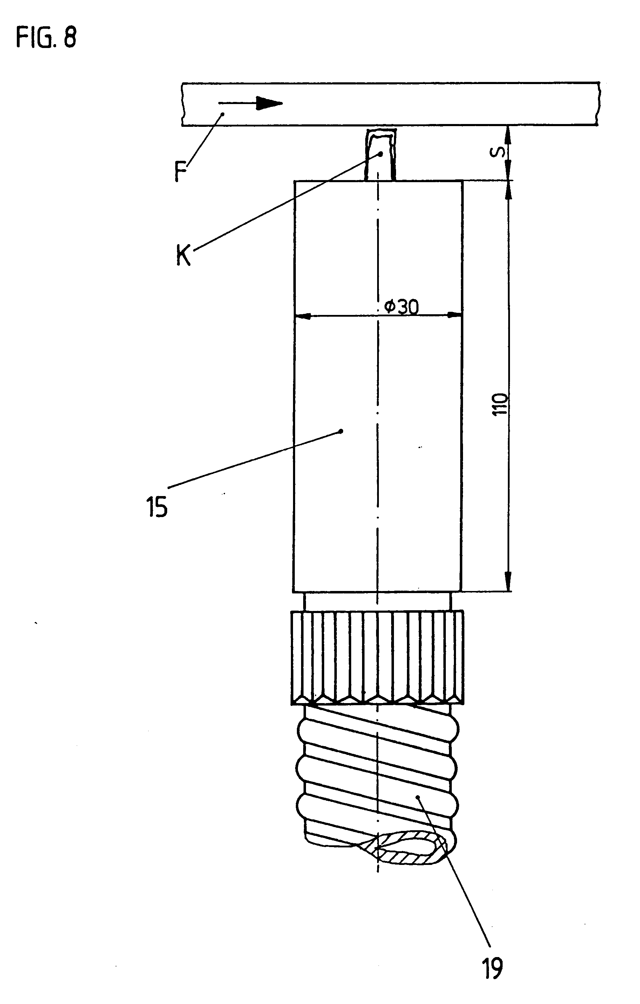

In Fig. 8 ist ein als Rohr ausgeführter Elektrodenhalter 15 dargestellt, wobei die Hochspannungs- und Gaszuführung über den entsprechend ausgeführten Zuführungsschlauch 19 erfolgt. Der Koronabogen ist mit K bezeichnet. Die zu behandelnde Folie F wird in Richtung des dargestellten Pfeiles bewegt.

In Fig. 9 sind am Beispiel der Verwendung eines Kondensators als strombegrenzendes Element vier verschiedene Schaltungsmöglichkeiten dargestellt. Bei bei der rechts unten dargestellten Ausführungsform fehlt der Kondensator 14, da hier eine einseitige Erdung bei 16 vorgenommen wurde. Die eine Elektrode 12 liegt also unmittelbar an Masse.

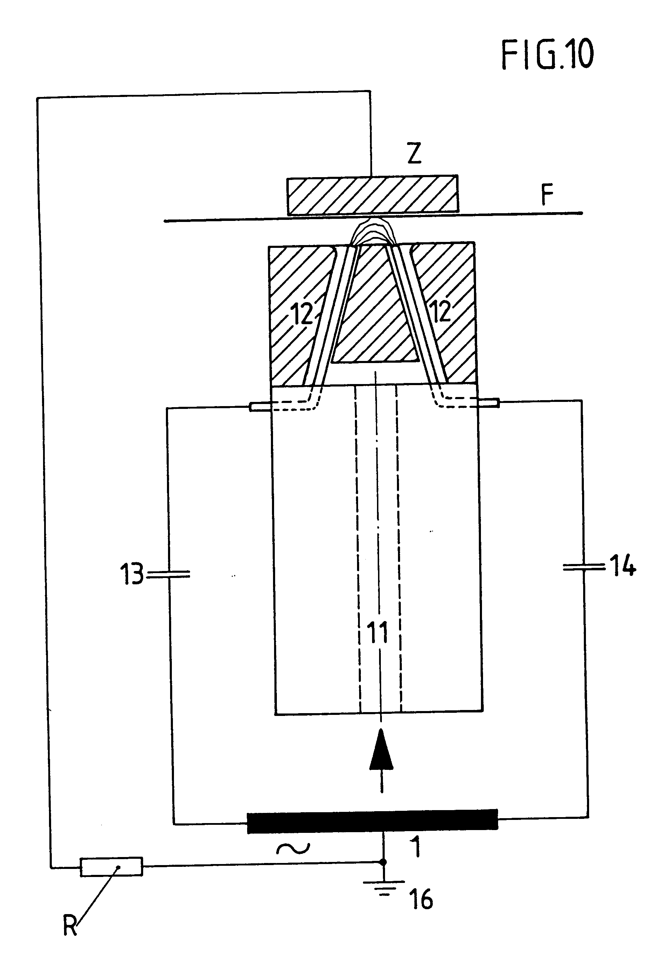

Die Ausführungsform nach Fig. 10 zeigt eine Zusatzelektrode Z auf der Rückseite der zu behandelnden Folie. Die Zusatzelektrode kann z.B. eine metallische Walze sein, über die die Folie F läuft. Die Sekundärspule des Transformators wird dann zweckmäßigerweise mittig geerdet. Der Massebezug 16 kann dann entfallen. Der Vorwiderstand R bzw. Thyristor oder Kondensator wird wahlweise zugeschaltet.

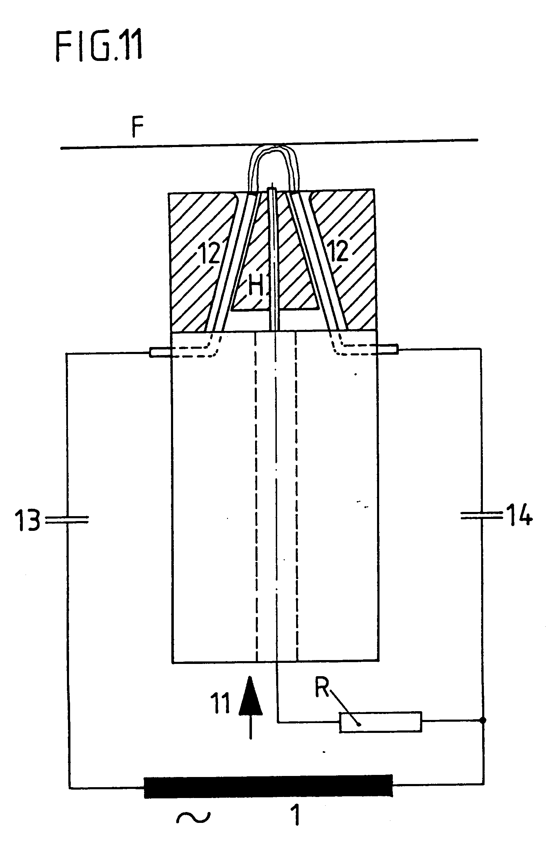

Zur Verbesserung der Zündcharakteristik kann eine Hilfselektrode H vorgesehen sein, so wie in Fig. 11 dargestellt. Diese wird über einen Vorwiderstand R mit Spannung beaufschlagt.

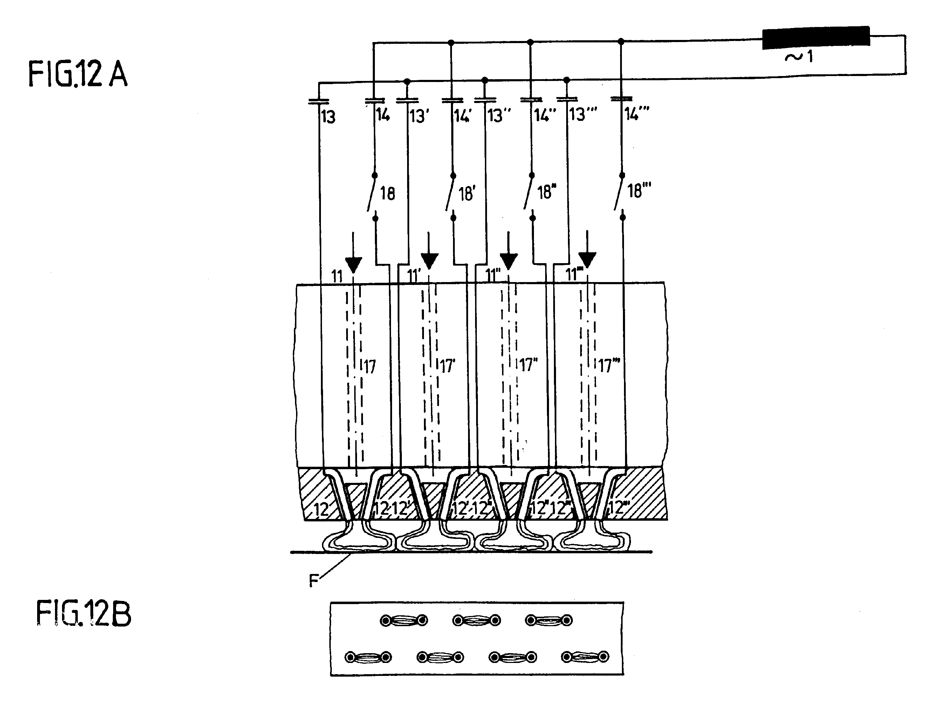

In Fig. 12 ist die Anordnung mehrerer Stiftelektrodenpaare mit jeweils einem zugehörigen Kanal 17 zur Druckgasbeaufschlagung dargestellt. Da die Behandlungsbreite eines Stiftelektrodenpaares im Millimeterbereich liegt, können hierdurch beliebig breite Behandlungen erfolgen, wenn entsprechende Stiftelektrodenpaare nebeneinander angeordnet werden. Es entsteht eine geschlossene, behandelte Oberfläche entsprechender Breite. Die Elektrodenpaare können so angeordnet werden, daß ihre Entladungsenden in Bezug auf die Bewegungsrichtung der Folie F hintereinander oder nebeneinander liegen. Die Einzelelemente können auch derart kombiniert werden, daß zwei (oder mehr) hintereinander angeordnete Reihen von Stiftelektrodenpaaren entstehen, und daß die Reihen gegeneinander versetzt sind. In Fig. 12 ist noch eine weitere Ausgestaltung dargestellt, nämlich der Einsatz mechanischer oder magnetischer Schalter 18, die zweckmäßigerweise hinter dem entsprechenden Kondensator 14 installiert sind, da die Spannung hier geringer ist. Hierdurch ist es möglich, durch Ab- und Zuschalten einzelner Elektrodenstiftpaare die Arbeitsbreite einzustellen und einzelne Spuren auf der Bahn unbehandelt zu lassen.

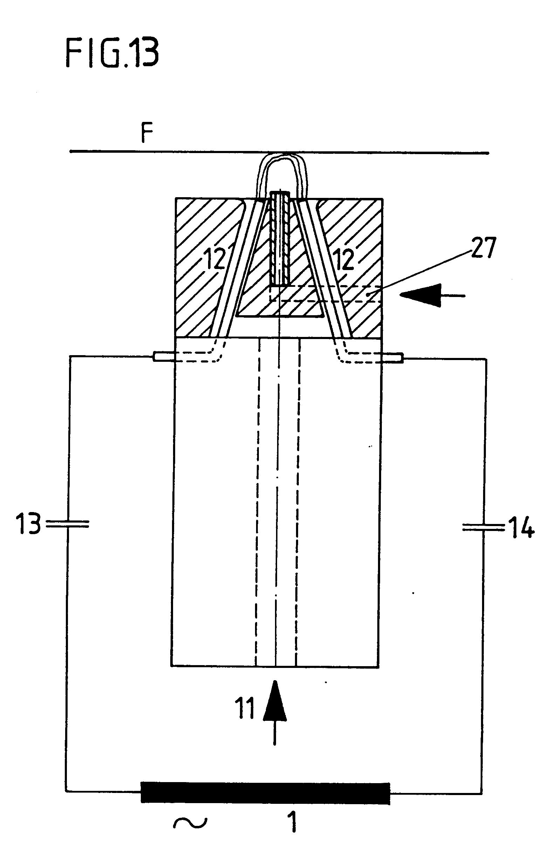

In Fig. 13 ist eine Ausführungsform dargestellt, bei der ein zusätzlicher Kanal 27 zur Zuführung eines Reaktivgases direkt zum Entladungsbogen vorgesehen ist.

## Patentansprüche

1. Vorrichtung zur indirekten Koronabehandlung von leitenden und nichtleitenden Materialien (F), z.B. Kunststoff-, Papier-, Metall- und/oder Gewebebahnen oder Formkörper aus diesen Materialien zur Erhöhung der Oberflächenenergie mit zwei metallischen Stiftelektroden (12) zwischen denen die Entladung stattfindet, die auf derselben Seite des vorzubehandelnden und relativ zu ihnen bewegten Materials (F) angeordnet sind, und deren Entladungsspalt in Richtung auf die zu behandelnde Oberfläche druckgasbeaufschlagt ist, und mit einem die elektrische Wechselspannung liefernden Transformator (1), dadurch gekennzeichnet, daß das Stiftelektrodenpaar (12) in einem Elektrodenhalter (15) aus Isoliermaterial, vorzugsweise Keramik, angeordnet ist, in dem für jede Stiftelektrode (12) ein eigener Kanal (17a) für die Druckgasbeaufschlagung ausgebildet ist.

2. Vorrichtung nach Anspruch 1, dadurch gekennzeichnet, daß mehrere Elektrodenpaare (12) bzw. Elektrodenhalter (15) mit einem Elektrodenpaar (12) nebeneinander angeordnet sind, wobei die Entladungsenden jedes Stiftelektrodenpaares in Bezug auf die Bewegungsrichtung der zu behandelnden Oberfläche sowohl hintereinander als auch nebeneinander anordbar sind.

3. Vorrichtung nach Anspruch 2, dadurch gekennzeichnet, daß einzelne Stiftelektrodenpaare (12) abschaltbar sind.

4. Vorrichtung nach Anspruch 3, dadurch gekennzeichnet, daß die Schalter (18) hinter dem strombegrenzenden Element, wie z.B. dem Kondensator (13 oder 14), angeordnet sind.

5. Vorrichtung nach einem oder mehreren der vorstehenden Ansprüche, dadurch gekennzeichnet, daß zur Verstärkung des Behandlungseffektes auf der Rückseite des zu behandelnden Materials (Folie F) eine Zusatzelektrode (Z) vorgesehen ist (Fig. 10).

6. Vorrichtung nach einem oder mehreren der vorstehenden Ansprüche, dadurch gekennzeichnet, daß zur Verbesserung des Zündeffektes eine Hilfselektrode (H) zwischen den Stiftelektroden (12) angeordnet ist, die über einen Vorwiderstand (R) mit Spannung beaufschlagbar ist (Fig. 11).

7. Vorrichtung nach einem oder mehreren der vorstehenden Ansprüche, dadurch gekennzeichnet, daß die Anordnung mit einem zusätzlichen Kanal (27) zur Druckgasbeaufschlagung versehen ist, mit dem ein Reaktivgas dem Entladungsbogen direkt zugeführt werden kann (Fig. 13).

## Claims

1. Apparatus for the indirect corona treatment of conductive and non-conductive materials (F), e.g. plastic, paper, metal and/or fabric webs or shaped articles made from these materials for increasing the surface energy with two metallic pin electrodes (12) between which the discharge takes place and which are located on the same side of the material (F) to be pretreated and moved relative thereto and whose discharge gap is supplied with compressed gas in the direction of the surface to be treated, and with a transformer (1) supplying the electric a.c. voltage, characterized in that the pin electrode pair (12) is located in an electrode holder (15) made from insulating material, preferably ceramic, in which for each pin electrode (12) is formed an individual compressed gas application channel (17a).

2. Apparatus according to claim 1, characterized in that several electrode pairs (12) respectively electrode holders (15) with an electrode pair (12) are juxtaposed, the discharge ends of each pin electrode pair being arranged in succession or in juxtaposed manner with respect to the movement direction of the surface to be treated.

3. Apparatus according to claim 2, characterized in that individual pin electrode pairs (12) can be disconnected.

4. Apparatus according to claim 3, characterized in that the switches (18) are positioned behind the current-limiting element, such as e.g. the capacitor (13) or (14).

5. Apparatus according to one or more of the preceding claims, characterized in that an additional electrode (Z) is provided for increasing the treatment effect on the back of the material to be treated (sheet F) (fig. 10).

6. Apparatus according to one or more of the preceding claims, characterized in that for improving the ignition effect an auxiliary electrode (H) is placed between the pin electrodes (12) and can be supplied with voltage by means of a series resistor (R) (fig. 11).

7. Apparatus according to one or more of the preceding claims, characterized in that the arrangement is provided with an additional pressure gas application channel (27) with which a reactive gas can be directly supplied to the discharge arc (fig. 13).

## Revendications

1. Dispositif pour le traitement indirect de l'effet de couronne de matériaux conducteurs et non conducteurs (F), par exemple de feuilles continues en matière plastique, en papier, métal et/ou tissu, ou de corps moulés en ces matériaux pour augmenter l'énergie superficielle avec deux électrodes métalliques à pointe (12), entre lesquelles a lieu la décharge, qui sont placées sur le même côté du matériau (F) qui doit être pré-traité et qui est déplacé par rapport à elles et dont l'entrefer de décharge est chargé en gaz comprimé en direction de la surface à traiter, et avec un transformateur (1) qui fournit la tension alternative électrique, **caractérisé en ce** que la paire d'électrodes à pointe (12) est placée dans un porte-électrodes (15) en matériau isolant, de préférence en céramique, dans lequel un canal propre (17a) est configuré pour chaque électrode à pointe (12) pour l'impact de gaz comprimé.

2. Dispositif selon la revendication 1, **caractérisé en ce** que plusieurs paires d'électrodes (12) ou porte-électrodes (15) avec une paire d'électrodes (12) sont placés l'un à côté de l'autre, les extrémités de décharge de chacune des paires d'électrodes à pointe pouvant être placées par rapport au sens de déplacement de la surface à traiter aussi bien derrière les unes les autres qu'à côté les unes des autres.

3. Dispositif selon la revendication 2, **caractérisé en ce** que des paires d'électrodes à pointe séparées (12) peuvent être déconnectées.

4. Dispositif selon la revendication 3, **caractérisé en ce** que les commutateurs (18) sont placés derrière l'élément limiteur de courant, comme par exemple le condensateur (13 ou 14).

5. Dispositif selon l'une ou plusieurs des revendications précédentes, **caractérisé en ce** qu'il est prévu une électrode supplémentaire (Z) pour renforcer l'effet de traitement au dos du matériau à traiter (feuille F) (figure 10).

6. Dispositif selon l'une ou plusieurs des revendications précédentes, **caractérisé en ce** qu'une électrode auxiliaire (H) est placée entre les électrodes à pointe (12) pour améliorer l'effet d'amorçage, électrode qui peut être chargée de tension par une résistance série (R) (figure 11).

7. Dispositif selon l'une ou plusieurs des revendications précédentes, **caractérisé en ce** que le dispositif est pourvu d'un canal supplémentaire (27) pour l'impact de gaz comprimé avec lequel un gaz réactif peut être amené directement à l'arc de décharge (figure 13).
